# EUROPÄISCHE PATENTSCHRIFT

(11) **EP 2 944 950 B1**
(45) Veröffentlichungstag und Bekanntmachung des Hinweises auf die Patenterteilung: **30.10.2019**
(21) Anmeldenummer: 14167998.5
(22) Anmeldetag: 13.05.2014
(51) Int. Cl.: G01N 27/414, G01N 27/28

(54) **Elektrochemischer Sensor beinhaltend einen Chipträger mit einem Befestigungselement für ein Dichtmittel**
Electrochemical sensor comprising a chip carrier with a fixing element for a sealing member
Capteur électrochimique comprenant un support de puce avec un élément de fixation pour un élément d'étanchéité

(43) Veröffentlichungstag der Anmeldung: 18.11.2015
(73) Patentinhaber: Mettler-Toledo GmbH, 8606 Greifensee (CH)
(72) Erfinder: Schneider, Ingo, 6330 Cham (CH); Baltensperger, Fritz, 8953 Dietikon (CH); Barcella, Corrado, 5304 Endingen (CH); Meier, Dario, 5400 Baden (CH)
(74) Vertreter: Mettler-Toledo

(56) Entgegenhaltungen:
- EP-A1- 1 396 718
- DE-A1-102009 001 632
- DE-A1-102009 026 991
- US-A1- 2009 096 458
- US-A1- 2012 247 955
- US-A1- 2014 012 098
- W. OELSSNER ET AL: "Encapsulation of ISFET sensor chips", SENSORS AND ACTUATORS B: CHEMICAL, Bd. 105, Nr. 1, 1. Februar 2005 (2005-02-01), Seiten 104-117, XP055031640, ISSN: 0925-4005, DOI: 10.1016/j.snb.2004.05.009

## Beschreibung

Die Erfindung betrifft einen elektrochemischen Sensor mit einem Sensorchip und dessen Anordnung und Einbau im Sensor.

Elektrochemische Sensoren mit einem Sensorchip werden im Labor sowie auch in Produktionsanlagen eingesetzt, um verschiedene chemische und/oder physikalische Parameter zu erfassen. Ein Beispiel stellt ein pH Sensor mit einem ionensensitiven Feldeffekttransistor (ISFET) als Sensorchip dar.

Gerade der Einsatz in Produktionsanlagen und unter Prozessbedingungen erfordert, dass der Sensor sehr robust ist. Ein Sensorchip, wie beispielsweise ein ISFET, sollte jedoch für eine Messung in direktem Kontakt mit dem zu messenden Medium stehen, wodurch es notwendig ist, dass der Sensor zumindest eine Öffnung aufweist. Der Sensorchip ist im Sensor so angeordnet, dass zumindest dessen sensitiver Bereich durch diese Öffnung mit dem Messmedium in Kontakt gebracht werden kann. Prozesstaugliche Sensoren weisen häufig einen im Wesentlichen zylindrischen Sensorkörper mit standardisierten Abmessungen auf, so dass diese einfach in die bestehenden Prozessanlagen integriert werden können.

Eine Herausforderung stellt der Einsatz von derartigen elektrochemischen Sensoren in biologischen, biotechnologischen, lebensmittelchemischen und/oder pharmazeutischen Prozessanlagen sowie auch im Labor in diesen Bereichen dar. Anwendungen in diesen Bereichen erfordern, dass der Sensor hygienisch ist und den entsprechenden Normen entspricht. Ein hygienischer Sensor zeichnet sich dadurch aus, dass sich im Einsatz möglichst keine Substanzen am Sensor anlagern und/oder sich dort vermehren können, da solche Kontaminationen beispielweise Biofouling verursachen und/oder sogar einen kompletten Prozess kontaminieren können.

Daher ist es gerade für solche Anwendungen wichtig, auf eine optimale Verkapselung des Sensorchips im Sensor zu achten, welche einerseits einen direkten Kontakt zwischen dem sensitiven Bereich und dem Messmedium gestattet und andererseits zumindest eine fluiddichte Abdichtung zwischen dem Messmedium und dem Inneren des Sensors gewährleistet, damit kein Messmedium in den Sensors eindringen kann.

Die Möglichkeiten zur Verkapselung von Sensorchips sind unter anderem in W. Oelßner et al. "Encapsulation of ISFET Sensor Chips", Sensors and Actuators B 105 (2005) 104-117 und V.L. Khanna "Critical issues, processes and solutions in ISFET packaging", Microelectronics Int. 25/2 (2008) 23-30 beschrieben und reichen vom einfachen Einkleben des Sensorchips, über die Verwendung eines Aufsatzes mit einem zwischen zwei Dichtungen gelagertem Sensorchip (EP 1 396 718 A1) oder ein Vergiessen des Sensorinneren mit einer härtbaren Füllsubstanz bis zum Verpressen mit einem Stöpsel, welcher den Sensorchip gegen eine die Öffnung umschliessende Dichtung drückt.

Als Dichtung können bekannte ringförmige Flachdichtungen oder auch eine auf den Sensortyp angepasste lasergeschnittene Dichtung eingesetzt werden, wie sie beispielsweise in DE 10 2009 026 991 A1 offenbart ist.

DE10 2009 001 632 A1 offenbart eine Sensoranordnung mit einem Gehäuse in dem ein ISFET-Sensorchip angeordnet ist. Der Sensorchip ist durch eine Öffnung im Gehäuse mit einem Messmedium in Kontakt steht, wobei die Öffnung mit einem Dichtmittel, unter Auslassung eines ionensensitiven Bereichs des Sensorchips, gegen das Messmedium abgedichtet ist. Zudem weist die Sensoranordnung einen Vibrationsanreger auf, welcher mechanisch mit dem Sensorchip gekoppelt ist, um den Sensorchip zu Schwingungen anzuregen. Dazu sind der Sensorchip und der Vibrationsanreger an gegenüberliegenden Seiten eines Trägers angeordnet. Zudem wird der Vibrationsanreger mittels eine Sprungfeder gegen den Träger gepresst.

Nachteilig an den bekannten Sensoren ist, dass diese häufig nicht den Anforderungen genügen, welche in Gebieten, wie zum Beispiel der Biochemie, Biotechnologie, Lebensmittelchemie und/oder Pharmazie, an einen hygienisch ausgebildeten Sensor gestellt werden, da der Sensor an dem mit dem Messmedium in Kontakt stehenden Bereich oder Ende produktionsbedingte Risse, Spalten oder Hinterschnitte aufweist, welche die Ansiedelung und Ablagerung von Substanzen aus dem Messmedium ermöglichen und wodurch beispielsweise die Lebensdauer des Sensors aufgrund eindringenden Messmediums verkürzt werden und/oder es zu Messfehlern kommen kann. Die Spalt- oder Rissbildung kann z.B. durch das Einfügen von Verschlusselementen in den Sensorkörper hervorgerufen werden. Diese Verschlusselemente dienen dazu einen Zugang zum Sensorkörper zu verschliessen, durch den der Sensorchip in den Sensorkörper eingeführt wird.

Die Aufgabe dieser Erfindung ist es daher einen elektrochemischen Sensor mit einem Sensorchip zu entwickeln, welcher insbesondere hygienisch ausgestaltet ist. Zudem soll der Sensor einfach zu montieren sein, also einfach zusammengebaut werden können.

Gelöst wird diese Aufgabe durch einen elektrochemischen Sensor zur Bestimmung mindestens eines physikalischen und/oder chemischen Parameters eines Messmediums. Der Sensor umfasst einen Sensorkopf, einen Sensorchip mit einem sensitiven Bereich, einen Sensorkörper mit einem Endstück, ein Dichtmittel und ein Anpresselement. Der Sensorkörper ist mit dem Sensorkopf verbunden und das Endstück ist ein Hohlkörper mit einem geschlossenen Endbereich und einer Messöffnung über welche im Betrieb ein Messmedium in Kontakt mit dem sensitiven Bereich des Sensorchips steht, welcher im Inneren des Hohlkörpers angeordnet ist. Das Dichtmittel umgibt die Messöffnung unter Auslassung des sensitiven Bereichs des Sensorchips und dichtet das Innere des Endstücks im Betrieb gegen das Messmedium ab. Das Anpresselement presst den Sensorchip gegen das Dichtmittel und den Rand der Messöffnung. Der Sensor zeichnet sich dadurch aus, dass der Hohlkörper des Endstücks in dem im Betrieb mit dem Messmedium in Kontakt stehenden Bereich einstückig und spaltfrei ausgestaltet ist.

Weiterhin umfasst der Sensor einen Chipträger, auf dem der Sensorchip im Betrieb im Endstück angeordnet ist. Der Chipträger umfasst ferner ein Befestigungselement für das Dichtmittel umfasst, um somit die Position des Chipträgers, des Sensorchips und des Dichtmittels in Relation zueinander zu fixieren.

Der Einsatz eines Chipträgers vereinfacht den Einbau oder das Einbringen des Sensorchips in das Endstück, da dieser zusammen mit dem Chipträger einfach durch eine endständige mediumsabgewandte Öffnung in das Endstück eingebracht werden kann.

Ein derartig ausgebildeter elektrochemischer Sensor ist besonders vorteilhaft, da dieser aufgrund der spaltfreien Ausgestaltung im mit dem Messmedium in Kontakt stehenden Bereich auch in Prozessen eingesetzt werden kann, welche hohe Anforderungen an ein hygienisches Design des Sensors haben.

In seiner Betriebslage ist das den Sensorchip enthaltende Ende des Sensors in Kontakt mit dem Messmedium, insbesondere ein sensitiver Bereich des Sensorchips. Dieses Ende des Sensors wird im Folgenden auch als "mediumszugewandt" bezeichnet. Als "mediumsabgewandt" werden analog Elemente bezeichnet, welche auf der vom Messmedium abgewandten Seite des Sensors angeordnet sind.

Das Anpresselement ist vorzugsweise als Federelement ausgestaltet und zwischen dem Chipträger und einer Wand des Endstücks angeordnet, so dass dessen Federkraft den Sensorchip und das Dichtmittel an den Rand der Messöffnung anpresst.

Ein Federelement als Anpresselement kann den Chipträger und somit auch den Sensorchip mit einer definierten Kraft, der Federkraft des Federelements, gegen die Messöffnung, insbesondere deren Rand, und das die Messöffnung umgebende Dichtelement pressen. Auf diese Weise kann ein mediumsdichter Abschluss des Endstücks im Randbereich der Messöffnung realisiert und zudem ein geeigneter Anpressdruck des Sensorchips gegen das Dichtmittel durch Wahl eines geeigneten Federelements realisiert werden kann.

Das Dichtmittel kann beispielsweise eine ringförmige Flachdichtung sein, welche zumindest teilweise im Sensorchip oder Sensorträger angeordnet ist. Ebenso kann eine Formdichtung als Dichtmittel eingesetzt werden. In einer weiteren Ausgestaltung umfasst das Dichtmittel einen Dichtring und einen Halter. Der Dichtring und Halter können ein- oder mehrteilig hergestellt werden. Vorzugsweise umfasst der Halter abgebogene Seitenteile mit jeweils einer Durchführung, welche in geeignete Vorsprünge am Chipträger eingreifen und so die Position des Dichtmittels auf dem Chipträger bestimmen und/oder fixieren können.

In einem bevorzugten Ausführungsbeispiel besteht das Endstück aus einem Polymermaterial, welches zumindest die gängigen Standards für hygienische Anforderungen an mehrfach eingesetzte Polymermaterialien erfüllt. Ein geeignetes Polymermaterial stellt beispielsweise PEEK (Polyetherketon) dar.

Das Endstück kann vorteilhafterweise einstückig aus dem Polymermaterial hergestellt werden, so dass dieses spalt- und rissfrei produziert werden kann. Zudem kann das Endstück durch Wahl eines geeigneten Polymermaterials biokompatibel ausgestaltet sein und/oder die Norm USP VI, der US Pharmakopöe, erfüllen.

Der Chipträger kann eine Aufnahme für den Sensorchip und mindestens einen Vorsprung als Befestigungselement für das Dichtmittel umfassen. Weiterhin kann der Chipträger eine oder mehrere Aussenrippen und/oder einen Vorsprung umfassen.

Die Ausgestaltung des Chipträgers ist vorzugsweise an die Form des Endstücks angepasst, so dass der Chipträger zusammen mit dem Sensorchip und/oder dem Anpresselement einfach in das Endstück eingesetzt und darin positioniert werden kann.

Dazu kann das Endstück eine endständige Beschickungsöffnung umfassen, durch welche der Sensorchip, das Anpresselement, das Dichtmittel und der Chipträger in das Endstück eingebracht werden. Diese Elemente sind derart ausgestaltet, dass sie möglichst werkzeugfrei in das Endstück eingeführt und dort positioniert werden können.

Ferner ist das Dichtmittel so im Endstück angeordnet ist, dass das Dichtmittel das Innere des Endstücks unter Auslassung des sensitiven Bereichs des Sensorchips im Betrieb gegen das Messmedium abdichtet.

Weiterhin kann der Sensor eine Durchführung im Endstück als Elektrolytbrücke oder Überführung (liquid junction) umfassen, durch welche im Betrieb das Messmedium mit einem Innenelektrolyten in Verbindung steht.

In der Durchführung ist ein Diaphragma angeordnet, welches zum Beispiel ein Stift oder ein stiftförmiges Element sein kann und welches eine poröse Keramik umfasst.

Weiterhin kann der Sensor ein Referenzelektrodensystem mit dem Innenelektrolyten, einer Referenzelektrode und der Elektrolytbrücke oder Überführung umfassen.

Ein Referenzelektrodensystem wird insbesondere bei Verwendung eines pH sensitiven Sensorchips benötigt, da ein stabiler Referenzwert zur Bestimmung des pH Werts des Messmediums benötigt wird. Vorteilhaft ist es, wenn die Referenzelektrode zusammen mit dem pH sensitiven Sensorchip im Sensor angeordnet ist, da so für eine aussagekräftige Messung nur ein Sensor in das Messmedium eingebracht werden muss.

Der Sensorchip umfasst vorzugsweise eine flexible Platine auf welcher ein ISFET angeordnet ist. Eine flexible Platine oder auch Flexprint ist flexibler und kann stärker verformt werden als andere Platinen, was insbesondere für den Einbau des Sensorchips in das Endstück von Vorteil ist.

In einer weiteren Ausgestaltung kann das Endstück mit einem Füllstoff gefüllt sein, welcher im zusammengebauten Zustand zumindest den Sensorchip, das Anpresselement und/oder den Chipträger im Endstück fixiert.

Der Füllstoff ist vorzugsweise aushärtbar, wie beispielsweise ein Polymermaterial, was einfach in das Endstück eingebracht und dort in situ ausgehärtet werden kann. Bevorzugt ist der Füllstoff ein Material, dass in fliessfähiger Form in das Endstück eingebracht werden und so die vorhandenen Zwischenräume zwischen den im Endstück angeordneten Bauelementen möglichst vollständig ausfüllen kann. Nach dem Aushärten des Füllstoffs sind diese Bauelemente in ihrer Position fixiert und tragen so zu einer langfristigen und dauerhaften Robustheit des Sensors bei.

Das Endstück und der Sensorkörper können über ein endständiges im Endstück ausgebildetes erstes Koppelmittel und ein endständiges im Sensorkörper ausgebildetes zweites Koppelmittel miteinander verbunden werden, wobei das erste und zweite Koppelmittel zusammenwirken. Das erste und zweite Koppelmittel können beispielsweis als Innen- und Aussengewinde, als eine Art Bayonet-Verschlusselement und/oder als in einander einrastende Elemente ausgebildet sein. Das Endstück kann über das erste und zweite Koppelmittel fest mit dem Sensorkörper, genauer dem Schaft des Sensorkörpers, verbunden werden. Ebenso kann die Verbindung zwischen dem ersten und zweiten Koppelmittel eine lösbare Verbindung sein, so dass ein Austausch des Endstücks möglich ist. Je nach Gesamtlänge des Sensors können zudem der Sensorkörper und das Endstück als ein einziges Bauteil ausgebildet sein.

Die spalt- und rissfreie Ausgestaltung des Endstücks bedingt, dass die im Inneren des Endstücks befindlichen Elemente durch eine Öffnung im mediumsabgewandten Ende des Endstücks eingeführt werden.

Dieses ist insbesondere durch die Verwendung des Chipträgers und des Anpresselements möglich, welche eine Führung für den Chipsensor darstellen und diesen mit grosser Präzision im Endstück unterhalb der Messöffnung platzieren und positionieren können. Das Anpresselement verfügt vorzugsweise über eine definierte Anpresskraft, mit welcher der Sensorchip von innen gegen den Rand der Messöffnung und das die Messöffnung umgebende Dichtmittel angepresst wird.

Insbesondere die Ausgestaltung des Endstücks und des Chipträgers ermöglicht den einfachen Zusammenbau des Endstücks, so dass dieser ohne Verwendung von Schrauben oder Klemmen realisiert werden kann. Der Chipträger verhindert zudem, dass der Sensorchip zum Einsetzen zu stark verbogen oder kurzfristig zu stark verformt werden muss.

Im Folgenden werden anhand der Figuren verschiedene Ausführungsbeispiele eines erfindungsgemässen elektrochemischen Sensors näher beschrieben, wobei gleiche Elemente mit gleichen oder ähnlichen Bezugszeichen versehen sind. Die Figuren zeigen:
- Fig. 1: Zwei Längsschnitte A und B durch einen erfindungsgemässen elektrochemischen Sensor entlang der Mittelängsachse, wobei die beiden Längsschnitte um 90 Grad zueinander verdreht sind;
- Fig. 2: eine Vergrösserung des Endstücks des Sensors aus Figur 1 im Schnitt;
- Fig. 3: einen Querschnitt durch das Endstück aus Figur 2 entlang der Ebene A-A;
- Fig. 4: eine dreidimensionale Ansicht eines nicht erfindungsgemässen Chipträgers ohne Befestigungselement für das Dichtmittel;
- Fig. 5: eine Anordnung eines weiteren Dichtmittels, eines Sensorchips, eines weiteren Chipträgers und eines Anpresselements als Explosionszeichnung.

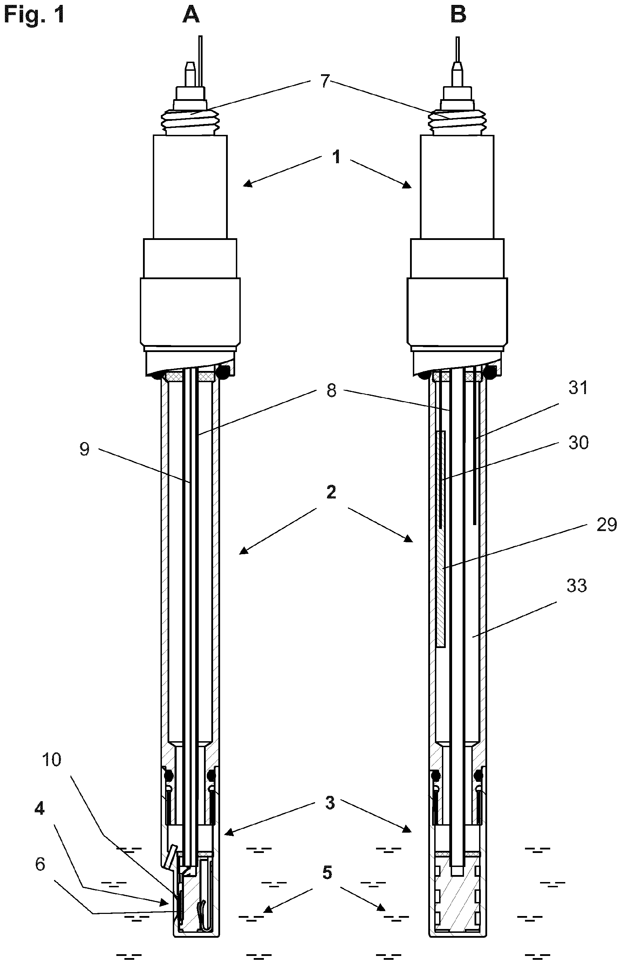

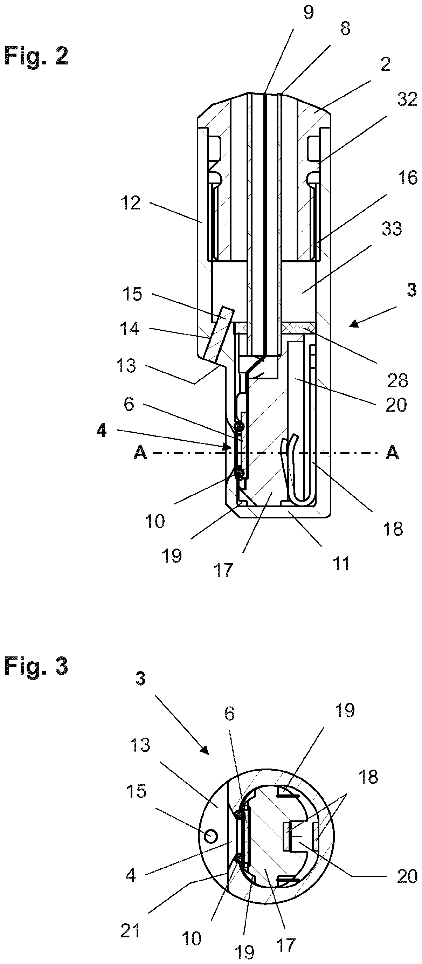

Figur 1 zeigt zwei Längsschnitte A und B durch einen erfindungsgemässen elektrochemischen Sensor, wobei Teile des Sensors geschlossen und nicht im Schnitt dargestellt sind. Die beiden Längsschnitte A und B sind zueinander um 90 Grad verdreht und werden im Folgenden zusammen beschrieben. Der Sensor umfasst einen Sensorkopf 1 und einen Sensorkörper 2 mit einem als Hohlkörper ausgestaltetem Endstück 3, in dem eine Messöffnung 4 ausgebildet ist. Die im Endstück 3 angeordneten Elemente werden anhand der Figuren 2 und 3 näher erläutert.

Im Sensorkopf 1 befinden sich elektronische Anschlüsse und/oder zumindest ein Teil der Elektronik des Sensors, welcher zur Steuerung, zur Erfassung der Messergebnisse und/oder zur Übertragung der Messergebnisse an eine übergeordnete Einheit, beispielsweise einen Transmitter oder eine Prozessleitstelle, benötigt wird. Der Sensorkopf 1 weist einen handelsüblichen Prozessanschluss 7 auf. Elektrochemische Sensoren mit einer Vielzahl von Sensorköpfen 1 und Prozessanschlüssen 7 sind bekannt und werden daher hier nicht im Detail beschrieben. Der erfindungsgemässe elektrochemische Sensor kann beispielsweise einen Sensorkopf 1 aufweisen, welcher eine drahtungebundene und/oder induktive Daten- und/oder Energieübertragung erlaubt, wie auch einen Sensorkopf 1, der über ein geeignetes Kabel und/oder einen geeignete Stecker mit Kabel an die übergeordnete Einheit angeschlossen wird. Weiterhin kann bereits im Sensorkopf 1 zumindest ein Teil der zum Betrieb des Sensors benötigten Sensorelektronik angeordnet sein.

Der Sensorkörper 2 ist ein im Wesentlichen zylinder- oder hülsenförmiger Körper, dessen Länge je nach Einsatzgebiet und Kundenwunsch variieren kann. Der Sensorkörper 2 kann beispielsweise einen Kunststoff, ein Polymermaterial, ein Metall, eine Metalllegierung und/oder Mischungen daraus umfassen. Im Sensorkörper 2 ist zudem eine in einer Kabelführung 8 angeordnete elektrische Leitung 9 zu erkennen, welche die Verbindung zwischen der Elektronik im Sensorkopf 1 und dem Sensorchip 6 herstellt.

Im Betrieb, insbesondere während einer Messung, taucht zumindest das Endstück 3 des Sensorkörpers 2 soweit in ein Messmedium 5 ein, dass die Messöffnung 4 mit dem Messmedium 5 in Kontakt steht, wie es in Figur 1 angedeutet ist. In einer Prozessanlage werden elektrochemische Sensoren häufig zusammen mit einer Armatur verwendet, in welche der Sensor eingesetzt wird und die einen grossen Teil des Sensors - unter Auslassung der während der Messung mit dem Messmedium in Kontakt stehenden Teile oder Elemente - umschliessen.

Die Messöffnung 4 stellt einen Zugang zum Inneren des Endstücks 3 dar, genauer zu einem Sensorchip 6, welcher so im Endstück angeordnet ist, dass sich ein sensitiver Bereich des Sensorchips 6 in der Messöffnung 4 befindet und im Betrieb mit dem Messmedium in Kontakt steht. Die Messöffnung 4 ist gegen den Sensorchip 6 und vor allem gegen das Innere des Endstücks 3 unter Auslassung des sensitiven Bereichs mit einem geeigneten Dichtmittel 10 abgedichtet, so dass das Messmedium 5 im Betrieb nicht in das Endstück 3 eindringen kann.

Insbesondere das Endstück 3 ist zumindest in allen im Betrieb direkt mit dem Messmedium 5 in Kontakt stehenden Bereichen spaltfrei ausgestaltet. Zudem ist die Oberfläche des Endstücks 3 zumindest im Kontaktbereich mit dem Messmedium glatt ausgestaltet und alle Ecken und Kanten des Endstücks sind abgerundet. Das Endstück 3 kann wie der Sensorkörper 2 beispielsweise einen Kunststoff, Polymermaterial, ein Metall, eine Metalllegierung und/oder Mischungen daraus umfassen. Die spaltfreie Ausgestaltung, die Materialwahl sowie die glatten Oberflächen sind besonders für einen Einsatz des Sensors in Bereichen mit hohen hygienischen Anforderungen, wie beispielsweise in der Biochemie, Biotechnologie, Lebensmittelchemie, Biologie oder Pharmazie, von Bedeutung, da so die Kontamination durch Ablagerungen von Substanzen aus dem Messmedium und/oder Biofouling möglichst verhindert werden kann.

Figur 2 zeigt in einer Vergrösserung von Figur 1 das zusammengebaute Endstück 3 im Schnitt.

Das Endstück 3 ist ein im Wesentlichen zylinderförmiger Hohlkörper, dessen mediumszugewandter Bereich 11 endständig geschlossen ausgebildet ist. Das Endstück weisst zudem einen flachen Bereich auf, in welchem die Messöffnung 4 angeordnet ist. Den Übergang zwischen dem mediumszugewandten Bereich 11 und einem mediumsabgewandten Bereich 12 bildet eine Schulter 13, in welcher eine Durchführung 14 ausgebildet ist, in der im Betrieb ein Diaphragma 15 einer im Sensor ausgebildeten Referenzelektrode angeordnet ist.

Die Referenzelektrode umfasst neben dem Diaphragma 15 einen Innenelektrolyten, welcher in einem im Inneren des Sensors angeordneten Elektrolytraum 33 angeordnet ist. Der Innenelektrolyt steht im Betrieb über das Diaphragma 15 in Kontakt mit dem Messmedium 5 und über ein Ableitelement 31 in Kontakt mit dem Sensorkopf 1. Der Innenelektrolyt und das Diaphragma 15 bilden zusammen mit einer als Patrone ausgeführten Referenzelektrode 29 und einem weiteren Ableitelement 30 das Referenzelektrodensystem des Sensors. Als Referenzelektrode 29 kann beispielsweise eine Silber/Silberchlorid-Elektrode eingesetzt werden. Bei wartungsfreier Ausführung des Referenzsystems ist der Innenelektrolyt vorzugsweise verdickt, also mit einem Verdickungsmittel versetzt. Als verdickter Innenelektrolyt kann beispielsweise eine wässrige, ca. 3 molare Kaliumchlorid-Lösung mit Zusatz eines Verdickungsmittels, wie beispielsweise Glycerin, unvernetztem Polyacrylamid, Stärkederivaten oder Alginaten, eingesetzt werden. Das Diaphragma 15 dient als Überführung der Referenzelektrode und kann beispielsweise aus einer porösen Keramik oder porösem PTFE (Polytetrafluorethylen) bestehen. Weiterhin können auch Büschel aus Platindraht oder sogenannte "single pore"-Systeme als Überführung eingesetzt werden, letztere insbesondere zusammen mit einem verdickten Innenelektrolyten, wie beispielsweise einem Hydrogel.

Am mediumsabgewandten Bereich 12 ist ein erstes Koppelmittel 16 ausgebildet, welches dazu dient das Endstück 3 mit dem mediumszugewandten Ende des Sensorkörpers 2 zu verbinden. Der Sensorkörper 2 weist dazu ein geeignetes zweites Koppelmittel 32 als Gegenstück zum ersten Koppelmittel 16 auf. Das erste und zweite Koppelmittel 16, 32 können beispielsweise als Innen- und Aussengewinde, als eine Art Bayonet-Verschlusselement und/oder als ineinander einrastende Elemente ausgebildet sein.

Die Messöffnung 4, welche auf dem Endstücks 3 auf einer durch das Abflachen ausgebildeten Fläche 21 ausgebildet ist, ist durch ein geeignetes Dichtmittel 10 gegen das Innere des Endstücks 3 und damit das Innere des Sensors abgedichtet, so dass auch im Betrieb kein Messmedium in den Sensor eindringen kann.

Das Endstück 3 sowie auch das Dichtmittel 10 können aus einem Polymermaterial bestehen. Das Endstück kann aus einem Material gefertigt sein, welches zumindest die gängigen Standards für hygienische Anforderungen an mehrfach eingesetzte Polymermaterialien erfüllt. Zu diesen Materialien gehört unter anderem PEEK natur. Das Endstück 3 kann aus diesem Material direkt ausgeformt werden. Als Dichtmittel kann ein geeignetes fluoriertes Elastomer beispielsweise unter dem Handelsnamen Fluoroprene von der Firma Freudenberg, Deutschland bezogen werden, das zumindest den gängigen hygienischen Anforderungen an Gummi- und Gummiartige Materialien, welche als Produkt-Kontakt-Oberflächen für Molkereigeräte eingesetzt werden, genügt.

Vorzugsweise sollten die Materialien zudem biokompatibel und/oder USP VI konform sein. Das in den Figuren 1 bis 3 gezeigte Dichtmittel 10 kann beispielsweise eine ringförmige Flachdichtung aus einem geeigneten Polymermaterial sein.

Weiterhin sind in Figur 2 die Elemente im Detail gezeigt, welche im zusammengebauten Zustand im Endstück 3 angeordnet sind: ein Sensorchip 6, ein Chipträger 17 und ein Anpresselement 18.

Der Sensorchip 6 kann beispielsweise ein pH sensitiver ISFET auf einer flexiblen Platine sein, der über eine Leitung 9 mit der Elektronik im Sensorkopf verbunden ist. Eine flexible Platine, beispielsweise ein Flexprint, hat den Vorteil, dass die Platine höhere Toleranzen in Bezug auf mechanische Verformung hat als eine herkömmliche Platine. Die flexible Platine umfasst Leiterbahnen zur Kontaktierung des ISFET, welcher mit der Platine fest verbunden bzw. an dieser gebonded ist. Der Gate-Bereich des ISFETs stellt den sensitiven Bereich des Sensorchips 6 dar und steht im Betrieb durch die Messöffnung 4 hindurch mit dem Messmedium 5 in direktem Kontakt.

Der Sensorchip 6 befindet sich auf einem Chipträger 17, welcher eine im Wesentlichen an den mediumszugewandten Bereich 11 des Endstücks 3 angepasste Form hat und diesen im Wesentlichen ausfüllt. Im Endstück 3 ist unterhalb der Schulter 13 ein Dichtelement 28 angeordnet, welches den mediumszugewandten Bereich 11 des Endstücks 3 abschliesst und den Elektrolytraum 33 begrenzt, so dass das Trennelement ein Eindringen des Innenelektrolyten in den mediumszugewandten Bereich 11 verhindert. Das Dichtelement 28 kann ein separates Element sein, fest mit dem Chipträger 17 verbunden sein oder als Teil des Chipträgers 17 ausgestaltet sein, also gemeinsam mit diesem einstückig produziert worden sein.

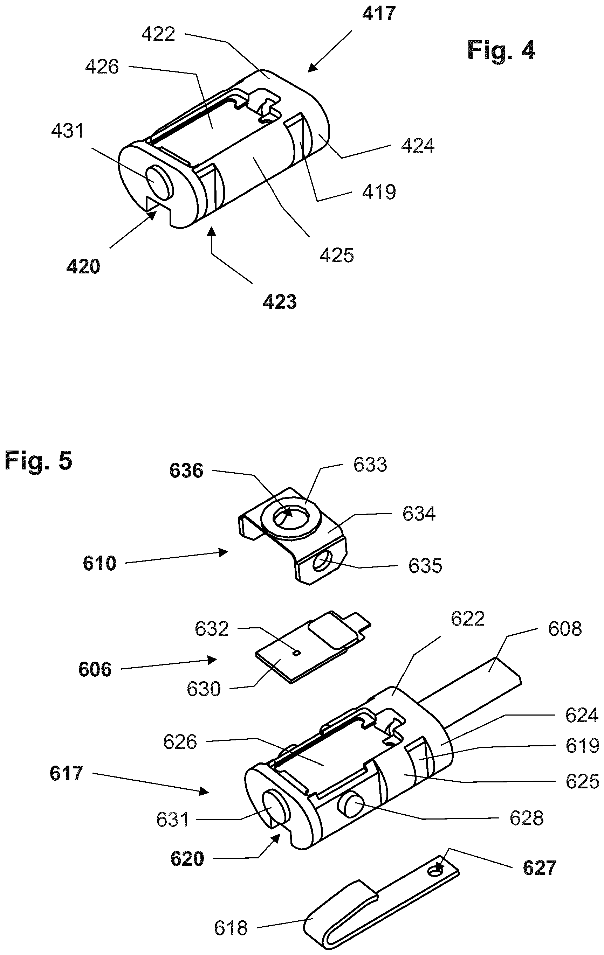

Der Chipträger 17 weist zueinander parallel ausgerichtete Flächen auf, die durch ein Mittelteil verbunden sind (s.a. Figuren 4 und 5). Die der Messöffnung 4 zugewandte Fläche weisst eine vertiefte Aufnahme für den Sensorchip 6 auf und wird im Folgenden zur Unterscheidung als Aufnahmefläche bezeichnet. Die der Aufnahmefläche gegenüberliegende Fläche wird im Folgenden als Anpressfläche bezeichnet, da das Anpresselement 18 im eingebauten Zustand an die Anpressfläche angelegt ist.

Das Anpresselement 18 entspricht im Wesentlichen einem gebogenen Streifen aus einen festen und dennoch biegsamen Material, wie beispielsweise einem Metall oder einer Metalllegierung. Ein derartig ausgestaltetes Anpresselement 18 wirkt wie eine Blattfeder und drückt im zusammengebauten Zustand den Chipträger 17 mit dem Sensorchip 6 mit einer definierten Federkraft gegen das Dichtmittel 10 und den Rand der Messöffnung 4. Das Anpresselement 18 ist so ausgebildet, dass es eine gleichmässige Kraft, hier eine Federkraft, ausübt, so dass das Dichtmittel 10 im Wesentlichen homogen komprimiert wird und so das Innere des Endstücks 3 gegen das Messmedium abgedichtet ist. Die Verwendung einer Blattfeder bietet den Vorteil eines besonders einfachen Zusammenbaus des Sensors, welcher durch einfaches Einschieben der Feder unter den Chipträger erfolgen kann. Denkbar ist aber auch die Verwendung einer oder mehrerer (zunächst gespannter) Sprungfedern, die nach dem Einbau des Chipträgers entspannt werden. Auch die Verwendung eines oder mehrerer länglicher Feder- oder Schraubelemente, welche im Inneren des Endstücks zwischen Chipträger und Aussenwand eingespannt ist, ist denkbar.

Das Anpresselement 18 ist zudem so ausgebildet, dass es zusammen mit dem Chipträger 17 und dem Sensorchip 6 einfach durch das offene mediumsabgewandte Ende des Endstücks 3 in dasselbe eingebracht und wieder entfernt werden kann. Auf diese Weise ist der Zusammenbau des Endstücks 3 besonders einfach und zudem ist es möglich einen Sensorchip 6 im eingebauten Zustand auf seine Funktionsfähigkeit zu testen und gegebenenfalls auszutauschen.

Zusätzlich kann der Innenraum des Endstücks 3 nach dem Zusammenbau noch mit einem härtbaren Füllstoff verfüllt werden, welcher nach dem Aushärten die im Endstück angeordneten Elemente in ihrer Position fixiert und zudem den Anpressdruck gegen das Dichtmittel 10 bzw. den Rand der Messöffnung 4 unabhängig von der durch das Anpresselement 18 ausgeübten Kraft macht. Durch das Verfüllen wird das Endstück 3 besonders stabil und robust, was insbesondere positiv für die Lagerung und den Umgang mit den Endstücken ist, da eine Verschiebung der Elemente im Inneren des Endstücks und/oder ein Nachlassen der Federkraft des Anpresselements verhindert werden können. Wird ein Füllstoff eingesetzt, so kann er nach dem Zusammenbau in die im Chipträger 17 ausgebildeten Zwischenräume 19 und eine Aussparung 20, gegen die das Anpresselement 18 angelegt ist, eingebracht werden. Das Dichtelement 28 schliesst dann den mit dem Füllstoff ausgefüllten mediumszugewandten Bereich 11 des Endstücks 3 ab. Das Dichtelement 28 kann beispielsweise auf den bereits gehärteten Füllstoff aufgesetzt werden oder der Füllstoff kann mit einem geeigneten Hilfsmittel, wie einer Spritze oder einem im Dichtelement 28 ausgebildeten Stutzen, durch das Dichtelement 28 hindurch in den mediumszugewandten Bereich 11 eingebracht und anschliessend dort ausgehärtet werden. Als Füllstoff eignen sich insbesondere Epoxy-basierte Vergussmassen oder auch Polyurethan- oder Silikon basierte Vergussmassen

Figur 3 zeigt einen Querschnitt durch das in den Figuren 1 und 2 gezeigte Endstück 3 entlang der Ebene A-A in Richtung des Sensorkopfes (s. Figur 2). Die bereits im Zusammenhang mit den Figuren 1 und 2 erläuterten Elemente tragen die gleichen Bezugszeichen. In der Ansicht von Figur 3 ist sowohl eine Fläche 21 im abgeflachten Bereich zu sehen, in welcher die Messöffnung 4 angeordnet ist, wie auch die Schulter 13, in welcher die Durchführung mit dem Diaphragma 15 zu erkennen ist.

Der Chipträger 17, auf welchem der Sensorchip 6 angeordnet ist, wird durch das Anpresselement 18 gegen das Dichtmittel 10 und den Rand der Messöffnung 4 gepresst. Die nicht bereits vom Chipträger 17 ausgefüllten Zwischenräume 19 im Inneren des Endstücks 3, genauer des mediumszugewandten Bereichs, sowie auch die Aussparung 20 für das Anpresselement können mit einem Füllstoff ausgefüllt werden, welcher nach dem Aushärten die Elemente im Endstück 3 fixiert und den Anpressdruck des Chipträgers 17 und des Sensorchips 6 gegen das Dichtmittel 10 unabhängig von der Anpresskraft des Anpresselements 18 macht.

Figur 4 zeigt in perspektivischer Darstellung eine nicht erfindungsgemässe Ausgestaltung des Chipträgers 417 ohne Befestigungselement für das Dichtmittel, welche in einem elektrochemischen Sensor eingesetzt werden kann. Der Chipträger 417 weist zwei zueinander parallel ausgerichtete Flächen 422, 423 auf, die durch einen mit Aussenrippen 424 versehenen Mittelteil 425 verbunden sind. Die Fläche 422 weist eine vertiefte Aufnahme 426 für den Sensorchip auf und wird im Folgenden zur Unterscheidung als Aufnahmefläche 422 bezeichnet. Die der Aufnahmefläche 422 gegenüberliegende Fläche 423 wird im Folgenden als Anpressfläche 423 bezeichnet. In der Anpressfläche 423 befindet sich eine Aussparung 420 zur Aufnahme eines Teils des Anpresselements, so dass das Anpresselement im eingebauten Zustand in der Aussparung 420 an die Anpressfläche 423 angelegt ist. Zudem weist der Chipträger 417 einen hier im Wesentlichen kreisförmig ausprägten Vorsprung 431 auf, welcher im eingebauten Zustand unter Bildung mindestens eines verfüllbaren Zwischenraums, gegen das mediumszugewandte Ende des Endstücks anschlägt. Die vom Chipträger 417 nicht ausgefüllten Zwischenräume im Endstück können mit einem Füllstoff verfüllt werden, welcher nach dem Aushärten die im Endstück angeordneten Elemente in ihrer Position fixiert. Die Ausgestaltung des Chipträgers 417 mit Aussenrippen 424 und Vorsprung 431 dient somit einerseits dazu den Chipträger 417 im Endstück zu positionieren, da sie in Kontakt mit der Aussenhülle des Endstücks stehen, zudem kann der aushärtbare Füllstoff in die zwischen den Aussenrippen 424 ausgebildeten Zwischenräume 419 oder Kanäle sowie die Aussparung 420 eingebracht und dort ausgehärtet werden. Der in Figur 4 gezeigte Chipträger 417 kann beispielsweise mit dem in Zusammenhang mit den Figuren 1 bis 3 beschriebenen Dichtmitteln verwendet werden.

In Figur 5 sind eine weitere Ausgestaltung eines Chipträgers 617 und eines Dichtmittels 610 zusammen mit einem Sensorchip 606 und einem Anpresselement 618 in Form einer Explosionsdarstellung gezeigt.

Das Anpresselement 618 ist im Wesentlichen eine Blattfeder aus einem der zuvor beschriebenen Materialien. Wie man hier erkennt, weisst das Anpresselement 618 am mediumsabgewandten Ende eine Bohrung oder Durchführung 627 auf, welche im zusammengebauten Zustand eine am Chipträger 617 ausgebildete Noppe umschliesst, welche in dieser Ansicht nicht zu sehen ist, wodurch das Anpresselement 618 eine definierte Position in Relation zum Chipträger 617 einnimmt.

Der in Figur 5 gezeigte Chipträger 617 entspricht weitestgehend dem in Figur 4 beschriebenen Chipträger 417. Ähnliche Bauelemente sind mit ähnlichen Bezugszeichen gekennzeichnet und für eine detaillierte Beschreibung dieser Elemente wird auf die Beschreibung der Figur 4 verwiesen. Im Unterschied zur Figur 4 weist der Chipträger 617 an beiden Seiten des Mittelteils 625 Vorsprünge 628 auf, welche zusammenwirkend mit Gegenstücken am Dichtmittel 610 dazu dienen das Dichtmittel 610 nach Einsetzen des Sensorchips 606 am Chipträger 617 anzulegen oder zu befestigen. Auf diese Weise können die Positionen des Chipträgers 617, des Sensorchips 606 und des Dichtmittels 610 in Relation zueinander fixiert werden.

Der Sensorchip 606 umfasst ein sensitives Element 632 mit einem sensitiven Bereich, welches auf einem Substrat und/oder einem Träger 630 aufgebracht ist. Das sensitive Element 632 kann beispielsweise ein pH sensitiver ISFET sein, welcher auf einer flexiblen Platine als Träger 630 angeordnet ist. Eine flexible Platine ist auch als Flexprint bekannt und hat den Vorteil, dass die Platine höhere Toleranzen in Bezug auf mechanische Verformung erlaubt als eine herkömmliche Platine. Die flexible Platine umfasst Leiterbahnen zur Kontaktierung des ISFET, welcher mit der Platine fest verbunden bzw. an dieser gebonded ist. Der Gate-Bereich des ISFETs stellt den sensitiven Bereich des Sensorchips 606 dar und steht im Betrieb durch die Messöffnung hindurch mit dem Messmedium in direktem Kontakt. Der Sensorchip 606 wird in die Aussparung 626 des Chipträgers 617 eingelegt und kann zudem in der Aussparung 626 fixiert werden, beispielsweise durch Einkleben.

Weiterhin ist in Figur 5 eine weitere Ausgestaltung des Dichtmittels 610 gezeigt, welche einen Dichtring 633 auf einem Halter 634 mit zwei seitlichen Durchführungen 635 und einer weiteren Durchführung 636, welche vom Dichtring 633 begrenzt wird und welche zur Kontaktierung des sensitiven Bereichs mit dem Messmedium dient, umfasst.

Vorzugsweise ist das Dichtmittel 610 einstückig ausgestaltet, was insbesondere beim Einsatz geeigneter Polymermaterialien möglich ist. Das Dichtmittel 610 wird als im Wesentlichen flache Platte ausgebildet und anschliessend in die gezeigte Form gebracht, indem die Aussenteile der Platte abgewinkelt werden. Ebenso ist es möglich den Halter 634 mit den Durchführungen 635 getrennt auszubilden und auf diesem Halter 634 einen geeigneten Dichtring 633 zu befestigen, wobei der Halter 634 mit einer entsprechenden Durchführung versehen und/oder ausgebildet ist, um welche der Dichtring 633 angeordnet wird. Geeignete Materialen sind beispielsweise EPDM (Ethylen-propylen-dien Monomer), Fluoroprene oder NBR (Nitritkautschuk), wobei insbesondere der Dichtring 633 den gängigen hygienischen Anforderungen an Gummi- und Gummiartige Materialien, welche als Produkt-Kontakt-Oberflächen für Molkereigeräte eingesetzt werden, folgen sollte.

Die zwei Durchführungen 635 in den abgebogenen Seitenteilen des Halters 634 stellen Gegenstücke zu den Vorsprüngen 628 am Chipträger dar und ermöglichen es, das Dichtmittel 610 über dem Sensorchip 606 am Chipträger 617 zu befestigen. Auf diese Weise entsteht ein kompaktes Bauteil, bei welchem die Position des Dichtrings 636 in Relation zum sensitiven Bereich des sensitiven Elements 632 vorgegeben ist, was den Einbau dieser Elemente in ein Endstück eines erfindungsgemässen Sensors stark vereinfacht.

Obwohl die Erfindung durch die Darstellung spezifischer Ausführungsbeispiele beschrieben worden ist, ist es offensichtlich, dass zahlreiche weitere Ausführungsvarianten in Kenntnis der vorliegenden Erfindung geschaffen werden können, beispielsweise indem die Merkmale der einzelnen Ausführungsbeispiele miteinander kombiniert und/oder einzelne Funktionseinheiten der Ausführungsbeispiele ausgetauscht werden. Insbesondere können neben den gezeigten Dichtmitteln auch bekannte O-Ringe oder Formdichtungen eingesetzt werden, welche zum Beispiel im in Figur 5 gezeigten Halter gelagert sind. Weiterhin können anstelle von pH sensitiven ISFETs andere ISFETs oder sogar andere sensitive Elemente eingesetzt werden, welche vorzugsweise im Betrieb ebenfalls über einen sensitiven Bereich mit dem Messmedium in Kontakt stehen. Die Form des Chipträgers kann an das zu verwendende Endstück und/oder den Sensorchip angepasst werden, wobei Aussparungen für einen Füllstoff realisiert sein sollten, falls die Elemente im Endstück mit einem härtbaren Füllstoff fixiert werden sollen.

### Liste der Bezugszeichen

- 1: Sensorkopf
- 2: Sensorkörper
- 3: Endstück
- 4: Messöffnung
- 5: Messmedium
- 6, 606: Sensorchip
- 7: Prozessanschluss
- 8: Kabelführung
- 9: Leitung
- 10, 610: Dichtmittel
- 11: mediumszugewandter Bereich
- 12: mediumsabgewandter Bereich
- 13: Schulter
- 14: Durchführung
- 15: Diaphragma
- 16: erstes Koppelmittel
- 17, 417, 617: Chipträger
- 18, 618: Anpresselement
- 19, 419, 619: Zwischenraum
- 20, 420, 620: Aussparung
- 21: Fläche
- 28: Dichtelement
- 29: Referenzelektrode
- 30: Ableitelement
- 31: Ableitelement
- 32: zweites Koppelmittel
- 33: Elektrolytraum
- 422, 622: Aufnahmefläche
- 423: Fläche; Anpressfläche
- 424, 624: Aussenrippe
- 425, 625: Mittelteil
- 426, 626: Aufnahme
- 431, 631: Vorsprung
- 627: Durchführung
- 628: Vorsprung
- 630: Träger
- 632: sensitives Element
- 633: Dichtring
- 634: Halter
- 635: Durchführung
- 636: Durchführung

## Patentansprüche

1. Elektrochemischer Sensor zur Bestimmung mindestens eines physikalischen und/oder chemischen Parameters eines Messmediums,
welcher Sensor einen Sensorkopf (1), einen Sensorchip (6, 606) mit einem sensitiven Bereich (632), einen Sensorkörper (2) mit einem Endstück (3, 503), ein Dichtmittel (10, 510, 610) und ein Anpresselement (18, 618) umfasst;
wobei der Sensorkörper (2) mit dem Sensorkopf (1) verbunden ist;
wobei das Endstück (3) ein Hohlkörper mit einem geschlossenen Endbereich und einer Messöffnung (4) ist, über welche im Betrieb ein Messmedium (5) in Kontakt mit dem sensitiven Bereich (632) des Sensorchips (6, 606) steht, welcher im Inneren des Hohlkörpers angeordnet ist;
wobei das Dichtmittel (10, 510, 610) die Messöffnung (4) unter Auslassung des sensitiven Bereichs (632) des Sensorchips (6, 606) umgibt und das Innere des Endstücks (3) im Betrieb gegen das Messmedium (5) abdichtet;
wobei das Anpresselement (18, 618) den Sensorchip (6, 606) gegen das Dichtmittel (10, 610) und den Rand der Messöffnung (4) presst;
wobei das Endstück (3) in dem im Betrieb mit dem Messmedium (5) in Kontakt stehenden Bereich einstückig und spaltfrei ausgestaltet ist; und
der Sensor ferner einen Chipträger (17, 617) umfasst, auf dem im Betrieb der Sensorchip (6, 606) angeordnet ist;
**dadurch gekennzeichnet, dass** der Chipträger ferner ein Befestigungselement (628) für das Dichtmittel (10, 610) umfasst, um somit die Position des Chipträgers (17, 617), des Sensorchips (6, 606) und des Dichtmittels (10, 610) in Relation zueinander zu fixieren.

2. Sensor gemäss Anspruch 2, **dadurch gekennzeichnet, dass** der Chipträger (17, 617) eine Aufnahme (626) für den Sensorchip (6, 606) umfasst.

3. Sensor gemäss einem der Ansprüche 1 oder 2, **dadurch gekennzeichnet, dass** das Endstück (3) eine endständige Beschickungsöffnung umfasst, durch welche der Sensorchip (6, 606), das Anpresselement (18, 618), das Dichtmittel (10, 610) und der Chipträger (17, 617) in das Endstück (3) eingebracht werden.

4. Sensor gemäss einem der Ansprüche 1 bis 3, **dadurch gekennzeichnet, dass** das Anpresselement (18, 618) ein Federelement ist, welches zwischen dem Chipträger (17, 617) und einer Wand des Endstücks (3) angeordnet ist und dessen Federkraft den Chipträger (17, 617) mit dem Sensorchip (6, 606) und das Dichtmittel (10, 610) gegen den Rand der Messöffnung (4) im Endstück anpresst.

5. Sensor gemäss einem der Ansprüche 1 bis 4, **dadurch gekennzeichnet, dass** das Dichtmittel (610) eine Formdichtung ist, welche einen auf einem Halter (634) angeordneten Dichtring (633) umfasst.

6. Sensor gemäss einem der Ansprüche 1 bis 5, **dadurch gekennzeichnet, dass** das Endstück (3) aus einem Polymermaterial besteht.

7. Sensor gemäss einem der Ansprüche 1 bis 5, **dadurch gekennzeichnet, dass** das Endstück (3) eine Durchführung (14) als Überführung aufweist, durch welche im Betrieb das Messmedium mit einem Innenelektrolyten in Verbindung steht, wobei in der Durchführung (14) ein Diaphragma (15) als Überführung angeordnet ist.

8. Sensor gemäss Anspruch 7, **dadurch gekennzeichnet, dass** der Sensor ferner ein Referenzelektrodensystem mit dem Innenelektrolyten, einer Referenzelektrode (29) und der Überführung umfasst.

9. Sensor gemäss einem der Ansprüche 1 bis 8, **dadurch gekennzeichnet, dass** der Sensorchip (6, 606) mit einem ISFET auf einer flexiblen Platine (630) angeordnet ist.

10. Sensor gemäss einem der Ansprüche 1 bis 9, **dadurch gekennzeichnet, dass** das Endstück (3) mit einem Füllstoff verfüllt ist, welcher im zusammengebauten Zustand zumindest den Sensorchip (6, 606), das Anpresselement (18, 618) und/oder den Chipträger (17, 617) im Endstück fixiert.

11. Sensor gemäss einem der Ansprüche 1 bis 10, **dadurch gekennzeichnet, dass** das Endstück (3) ein endständiges erstes Koppelmittel (16) und der Sensorkörper (2) ein endständiges zweites Koppelmittel (32) umfasst, welches erste und zweite Koppelmittel (16, 32) zusammenwirkend das Endstück (3) mit dem Sensorkörper (2) verbinden.

## Claims

1. An electrochemical sensor for determining at least one physical and/or chemical parameter of a measuring medium,
with said sensor comprising a sensor head (1), a sensor chip (6, 606) with a sensitive region (632), a sensor body (2) with an end piece (3, 503), a sealing member (10, 510, 610), and a press-on element (18, 618);
wherein the sensor body (2) is connected to the sensor head (1);
wherein the end piece (3) is a hollow body with a closed end region and a measuring opening (4), by means of which, during operation, a measuring medium (5) makes contact with the sensitive region (632) of the sensor chip (6, 606), which is arranged in the interior of the hollow body;
wherein the sealing member (10, 510, 610) encloses the measuring opening (4), excluding the sensitive region (632) of the sensor chip (6, 606), and the interior of the end piece (3) seals off the measuring medium (5) during operation;
wherein the press-on element (18, 618) presses the sensor chip (6, 606) against the sealing member (10, 610) and the edge of the measuring opening (4);
wherein the end piece (3) is designed as a single piece and is free of gaps in the region making contact with the measuring medium (5) during operation; and
the sensor further comprises a chip carrier (17, 617), on which the sensor chip (6, 606) is arranged during operation;
**characterized in that** the chip carrier further comprises a fixing element (628) for the sealing member (10, 610) in order to the fix the position of the chip carrier (17, 617), of the sensor chip (6, 606), and of the sealing member (10, 610) in relation to one another.

2. The sensor according to claim 2, **characterized in that** the chip carrier (17, 617) comprises a mount (626) for the sensor chip (6, 606).

3. The sensor according to any of claims 1 or 2, **characterized in that** the end piece (3) comprises a terminal feed opening, through which the sensor chip (6, 606), the press-on element (18, 618), the sealing member (10, 610), and the chip carrier (17, 617) are placed into the end piece (3).

4. The sensor according to any of claims 1 to 3, **characterized in that** the press-on element (18, 618) is a spring element, which is arranged between the chip carrier (17, 617) and a wall of the end piece (3) and the spring force of which presses the chip carrier (17, 617) with the sensor chip (6, 606) and the sealing member (10, 610) against the edge of the measuring opening (4) in the end piece.

5. The sensor according to any of claims 1 to 4, **characterized in that** the sealing member (610) is a molded seal, which comprises a sealing ring (633) arranged on a retainer (634).

6. The sensor according to any of claims 1 to 5, **characterized in that** the end piece (3) consists of a polymer material.

7. The sensor according to any of claims 1 to 5, **characterized in that** the end piece (3) has a opening (14) as a liquid junction, by means of which the measuring medium makes contact with an internal electrolyte during operation, wherein a diaphragm (15) is arranged in the opening (14) as a liquid junction.

8. The sensor according to claim 7, **characterized in that** the sensor further comprises a reference electrode system with the internal electrolyte, a reference electrode (29), and the liquid junction.

9. The sensor according to any of claims 1 to 8, **characterized in that** the sensor chip (6, 606) is arranged on a flexible PC board (630) with an ISFET (ion-sensitive field-effect transistor).

10. The sensor according to any of claims 1 to 9, **characterized in that** the end piece (3) is filled with a filler, which fixes in position, in the assembled state, at least the sensor chip (6, 606), the press-on element (18, 618), and/or the chip carrier (17, 617) in the end piece.

11. The sensor according to any of claims 1 to 10, **characterized in that** the end piece (3) comprises a terminal first coupling member (16) and the sensor body (2) comprises a terminal second coupling member (32), with said first and second coupling member (16, 32) jointly connecting the end piece (3) to the sensor body (2).

## Revendications

1. Capteur électrochimique pour la détermination d'au moins un paramètre physique et/ou chimique d'un milieu de mesure,
lequel capteur comprend une tête de capteur(1), une puce de capteur (6, 606) avec une zone sensitive (632), un corps de capteur (2) avec un embout (3, 503), un élément d'étanchéité (10, 510, 610) et un élément de pression (18, 618) ;
dans lequel le corps de capteur (2) est relié à la tête de capteur(1) ;
dans lequel l'embout (3) est un corps creux avec une zone d'extrémité fermée et une ouverture de mesure (4), par le biais de laquelle en fonctionnement un milieu de mesure (5) est en contact avec la zone sensitive (632) de la puce de capteur (6, 606), lequel est agencé à l'intérieur du corps creux ;
dans lequel l'élément d'étanchéité (10, 510, 610) entoure l'ouverture de mesure (4) en laissant libre la zone sensitive (632) de la puce de capteur (6, 606) et étanchéifie l'intérieur de l'embout (3) en fonctionnement contre le milieu de mesure (5) ;
dans lequel l'élément de pression (18, 618) presse la puce de capteur (6, 606) contre l'élément d'étanchéité (10, 610) et le bord de l'ouverture de mesure (4) ;
dans lequel l'embout (3) est configuré d'un seul tenant sans fente dans la zone en contact en fonctionnement avec le milieu de mesure (5) ; et
le capteur comprend en outre un support de puce (17, 617), sur lequel la puce de capteur (6, 606) est agencée en fonctionnement ;
**caractérisé en ce que** le support de puce comprend en outre un élément de fixation (628) pour l'élément d'étanchéité (10, 610) pour fixer l'une par rapport à l'autre la position du support de puce (17, 617), de la puce de capteur (6, 606) et de l'élément d'étanchéité (10, 610).

2. Capteur selon la revendication 2, **caractérisé en ce que** le support de puce (17, 617) comprend un logement (626) pour la puce de capteur (6, 606).

3. Capteur selon l'une quelconque des revendications 1 ou 2, **caractérisé en ce que** l'embout (3) comprend une ouverture de chargement terminale, par laquelle la puce de capteur (6, 606), l'élément de pression (18, 618), l'élément d'étanchéité (10, 610) et le support de puce (17, 617) sont introduits dans l'embout (3).

4. Capteur selon l'une quelconque des revendications 1 ou 3, **caractérisé en ce que** l'élément de pression (18, 618) est un élément ressort, lequel est agencé entre le support de puce (17, 617) et une paroi de l'embout (3) et dont la force du ressort presse le support de puce (17, 617) avec la puce de capteur (6, 606) et l'élément d'étanchéité (10, 610) contre le bord de l'ouverture de mesure (4) dans l'embout.

5. Capteur selon l'une quelconque des revendications 1 à 4, **caractérisé en ce que** l'élément d'étanchéité (610) est un joint d'étanchéité moulé, lequel comprend une bague d'étanchéité (633) agencée sur un support (634).

6. Capteur selon l'une quelconque des revendications 1 à 5, **caractérisé en ce que** l'embout (3) est en un matériau polymère.

7. Capteur selon l'une quelconque des revendications 1 à 5, **caractérisé en ce que** l'embout (3) présente un passage (14) en tant que jonction liquide par lequel le milieu de mesure communique en fonctionnement avec un électrolyte interne, dans lequel un diaphragme (15) est agencé dans le passage (14) en tant que jonction liquide.

8. Capteur selon la revendication 7, **caractérisé en ce que** le capteur comprend en outre un système d'électrodes de référence avec l'électrolyte interne, une électrode de référence (29) et le jonction liquide.

9. Capteur selon l'une quelconque des revendications 1 à 8, **caractérisé en ce que** la puce de capteur (6, 606) est agencée avec un ISFET sur un circuit imprimé souple (630).

10. Capteur selon l'une quelconque des revendications 1 à 9, **caractérisé en ce que** l'embout (3) est rempli d'un matériau de remplissage, lequel fixe à l'état assemblé au moins la puce de capteur (6, 606), l'élément de pression (18, 618) et/ou le support de puce (17, 617) dans l'embout.

11. Capteur selon l'une quelconque des revendications 1 à 10, **caractérisé en ce que** l'embout (3) comprend un premier élément de couplage terminal (16) et le corps de capteur (2) comprend un deuxième élément de couplage terminal (32), lequel premier et deuxième élément de couplage (16, 32) relie par coopération l'embout (3) avec le corps de capteur (2).
